# EUROPÄISCHE PATENTSCHRIFT

(11) **EP 3 601 013 B1**
(45) Veröffentlichungstag und Bekanntmachung des Hinweises auf die Patenterteilung: **05.05.2021**
(21) Anmeldenummer: 18713831.8
(22) Anmeldetag: 19.03.2018
(51) Int. Cl.: B62D 1/181

(54) **VERSTELLBARE LENKSÄULE FÜR EIN KRAFTFAHRZEUG**
ADJUSTABLE STEERING COLUMN FOR VEHICLE
COLONNE DE DIRECTION ADJUSTABLE POUR VÉHICULE

(30) Priorität: 23.03.2017 DE 102017204872
(43) Veröffentlichungstag der Anmeldung: 05.02.2020
(73) Patentinhaber: thyssenkrupp Presta AG, 9492 Eschen (LI); thyssenkrupp AG, 45143 Essen (DE)
(72) Erfinder: GEISELBERGER, Thomas, 9014 St. Gallen (CH); YOHO, Justin, Westfield, Indiana 46062 (US); PICHONNAT, Christian, Indianapolis, Indiana 46236 (US)
(74) Vertreter: thyssenkrupp Intellectual Property GmbH
(86) Internationale Anmeldenummer: PCT/EP2018/056868
(87) Internationale Veröffentlichungsnummer: WO 2018/172275

(56) Entgegenhaltungen:
- EP-A2- 2 508 409
- DE-A1-102009 038 285

## Beschreibung

### Stand der Technik

Die Erfindung betrifft eine verstellbare Lenksäule für ein Kraftfahrzeug, umfassend eine Stelleinheit, in der eine Lenkspindel um eine Längsachse drehbar gelagert ist, und eine Trageinheit, welche zwei nach unten vorstehende, quer zur Längsachse gegenüberliegende Seitenwangen aufweist, zwischen denen die Stelleinheit in Höhenrichtung verstellbar angeordnet ist, wobei ein motorischer Verstellantrieb einen Stellhebel aufweist, der an der Stelleinheit und an der Trageinheit jeweils um eine quer zur Längsachse liegende Schwenkachse in einem Gelenk verschwenkbar gelagert ist, wobei zumindest ein Gelenk einen Gelenkbolzen aufweist, der in einer Lagerbohrung des Stellhebels gelagert ist.

Zur Anpassung der Lenkradposition an die Sitzposition des Fahrers eines Kraftfahrzeugs sind höhenverstellbare Lenksäulen bekannt, bei denen das am hinteren Ende der Lenkspindel angebrachte Lenkrad in Höhenrichtung quer zur Lenksäulen-Längsachse im Fahrzeuginnenraum positioniert werden kann.

Die Lenkspindel in einer Lageranordnung ist in einer Manteleinheit der Stelleinheit in der die um ihre Längsachse drehbar gelagert ist. Die Manteleinheit ist zwischen den einander gegenüberliegenden Innenseiten der beiden gabelartig nach unten vorstehenden Seitenwangen einer Trag- oder Konsoleneinheit angeordnet, welche an ihrer Oberseite fest mit der Karosserie des Kraftfahrzeugs verbunden ist. Zwischen der Manteleinheit und der Trageinheit ist bei einer gattungsgemäßen verstellbaren Lenksäule ein motorischer Verstellantrieb angeordnet, der über einen Antriebsmotor einer Verlagerung der Stelleinheit relativ zur Trageinheit in Höhenrichtung ermöglicht, wobei die Stelleinheit entlang den Seitenwangen je nach Verstellrichtung auf- oder abwärts bewegt wird, bis die gewünschte Höhenposition des Lenkrads erreicht ist.

Eine Lenksäule der eingangs genannten Art ist beispielsweise in der AT 511 962 A4 beschrieben. Der daraus bekannte Verstellantrieb umfasst einen Spindeltrieb mit einer Gewindespindel, die in eine Spindelmutter eingreift und relativ zu dieser drehend von einem elektrischen Stellmotor antreibbar ist, so dass Spindelmutter und Gewindespindel relativ zueinander eine Linearbewegung in Richtung der Gewindeachse ausführen. Die lineare Bewegung des Spindeltriebs wird über ein Hebelgetriebe in eine Höhenverstellung der Lenksäule umgesetzt. Das Hebelgetriebe weist einen Schwenkhebel auf, der um eine quer zur Längsachse, relativ zur Fahrzeugkarosserie horizontal liegende Schwenkachse verschwenkbar an der Trageinheit gelagert ist, und um eine dazu parallele Schwenkachse mit Abstand in Längsrichtung drehbar an der Stelleinheit gelagert ist. Die Schwenkachsen sind jeweils in einem Gelenk realisiert, mit einem Gelenkbolzen, der in einer Lagerbohrung gelagert ist, die bevorzugt in dem Schwenkhebel ausgebildet ist. Der Spindeltrieb greift derart an dem Schwenkhebel an, so dass besagte Linearbewegung in eine Schwenkbewegung des Schwenkhebels umgesetzt wird, durch welche die Stelleinheit in Höhenrichtung relativ zur Trageinheit bewegt wird DE 10 2009 038285 beschreibt eine gattungsgemässe verstellbare Lenksäule für ein Kraftfahrzeug.

Die Anordnung des Schwenkhebels zwischen Stelleinheit und Innenseite einer Seitenwange hat den Vorteil, dass ein leistungsstarker Spindeltrieb platzsparend in die Lenksäule integriert werden kann, und über die Auslegung des Schwenkhebels eine Anpassung der Kinematik der Höhenverstellung vorgenommen werden kann.

Der Schwenkhebel lässt lediglich eine Relativbewegung in Höhenrichtung zu, und sorgt dadurch für eine Fixierung der Stelleinheit relativ zur Trageinheit in Seitenrichtung, d.h. quer zur Höhenrichtung und zur Längsachse. Die seitliche Abstützung führt jedoch zu einer Querbelastung der Gelenke und zu einer Biegebelastung des Schwenkhebels, wodurch die Steifigkeit der Verbindung begrenzt wird. Eine Erhöhung der Steifigkeit und der Eigenfrequenz würde einen erheblichen Zusatzaufwand bei der Dimensionierung der Lager und des Schwenkhebels erforderlich machen, der allein schon durch den geringen zur Verfügung stehenden Bauraum nicht darstellbar ist.

Angesichts der vorangehend erläuterten Problematik ist es eine Aufgabe der vorliegenden Erfindung, eine verbesserte Lenksäule der eingangs genannten Art zur Verfügung zu stellen, die bei geringem Zusatzaufwand eine höhere Steifigkeit und Eigenfrequenz hat.

### Darstellung der Erfindung

Zur Lösung der vorgenannten Problematik wird erfindungsgemäß vorgeschlagen, dass zumindest ein Gelenkbolzen ein Abstützelement aufweist, welches sich gleitend zwischen der Stelleinheit und einer Seitenwange abstützt.

Der Schwenkhebel ist, zumindest mit einem Abschnitt, zwischen Stelleinheit und Seitenwange angeordnet. Erfindungsgemäß ist zwischen der Stelleinheit, beispielsweise einer seitlichen Außenfläche der Manteleinheit, und einer der Stelleinheit zugewandten Innenseite zumindest einer der Seitenwangen an zumindest einem der dort angeordneten Gelenkbolzen ein Abstützelement angeordnet. Das Abstützelement liegt zwischen Stelleinheit und Innenseite der Seitenwange im Gleitkontakt an, so dass es die Stelleinheit an der Seitenwange abgestützt ist, bevorzugt erfolgt dies mit nur geringen Spielen oder besonders bevorzugt durch eine elastische Vorspannung spielfrei. Dabei wird die seitliche Stützkraft von dem Abstützelement durch den Gelenkbolzen axial in Richtung der Bolzenachse, welche einer Schwenkachse des Schwenkhebels entspricht, von der Stelleinheit auf die Trageinheit übertragen. Die Steifigkeit der seitlichen Fixierung ist nicht mehr wie im Stand der Technik durch die Biegesteifigkeit des Schwenkhebels und die Quersteifigkeit der Gelenklager begrenzt, sondern kann durch die axiale Steifigkeit der erfindungsgemäßen Anordnung aus Gelenkbolzen und Abstützelement erhöht werden. Aufgrund des relativ kleinen seitlichen Abstandes zwischen der Stelleinheit und den Seitenwangen erfolgt durch die starren und biegesteifen Seitenwangen eine belastbare Abstützung. Dadurch wird eine Erhöhung der Eigenfrequenz der gesamten Lenksäule und die Erhöhung der Steifigkeit der von der Trageinheit getragenen Stelleinheit erreicht.

Ein Vorteil der Erfindung ist, dass ein in einer bekannten Konstruktion bereits vorhandener Gelenkbolzen neben der verschwenkbaren Lagerung des Schwenkhebels eine zusätzliche Funktion erhält, nämlich die direkte seitliche Abstützung der Stelleinheit. Um dies zu realisieren, kann das Abstützelement so bemessen und in seiner Form gestaltet werden, dass es den im Stand der Technik vorliegenden freien seitlichen Zwischenraum zwischen dem Gelenkbolzen und der Innenseite der Seitenwange überbrückt. Dadurch ist in vorteilhafter Weise gewährleistet, dass kein zusätzlicher Bauraum erforderlich ist. Es ist daher denkbar, durch die erfindungsgemäße Ausgestaltung eines Gelenkbolzens mit einem Abstützelement bestehende Konstruktionen von Lenksäulen zu verbessern.

Die erfindungsgemäße Ausgestaltung ist insbesondere bei einer Lenksäule vorteilhaft umsetzbar, bei der mindestens ein Schwenkhebel zwischen der Stelleinheit und einer Seitenwange angeordnet ist. Dabei befindet sich der Schwenkhebel in dem seitlichen Zwischenraum zwischen Stelleinheit und der Innenseite einer dieser gegenüberliegenden Seitenwange. Durch das Abstützelement wird der Bewegungsraum des Schwenkhebels nicht beeinträchtigt.

Um zu ermöglichen, dass ein erfindungsgemäß an einem Gelenkbolzen angebrachtes Abstützelement beim Verstellen der Lenksäule in Höhenrichtung möglichst spielfrei auf der Innenseite der Seitenwange entlanggleitet, kann auf der Innenseite der Seitenwange in dem Bereich, in dem der Gelenkbolzen beim Verstellen in Höhenrichtung entlang bewegbar ist, eine Gleitbahn ausgebildet sein. Die Gleitbahn kann hinsichtlich ihrer Abmessungen und Struktur an das Abstützelement angepasst sein, so dass dieses reibungsarm darauf gleiten kann, beispielsweise durch eine geeignete Materialpaarung von Abstützelement und Seitenwange. Beispielsweise kann die Seitenwange aus Stahl oder Metall-Druckguss (Aluminiumdruckguss) bestehen, und das Abstützelement im Bereich des Gleitkontakts aus Buntmetall oder einem Kunststoffmaterial. Bevorzugt ist das Abstützelement vollständig aus einem Kunststoffmaterial gebildet. Alternativ kann es vorgesehen sein, dass das Abstützelement als Sinterbauteil oder als Massivumformbauteil ausgebildet ist, wobei eine Beschichtung zur Reibungsreduktion vorgesehen sein kann.

Eine vorteilhafte Ausführung der Erfindung sieht vor, dass das Abstützelement an dem Gelenkbolzen in Richtung der Schwenkachse von dem Stellhebel vorstehend angebracht ist. Der Schwenkhebel kann dabei in an sich bekannten Weise ausgebildet sein, so dass er sich zum Verstellen in dem Zwischenraum zwischen Stelleinheit und Seitenwange verschwenkt werden kann. Ein Gelenkbolzen bildet jeweils einen Lagerzapfen, der sich axial in Richtung der Schwenkachse erstreckt. Ein Abstützelement kann seitlich derart von dem Schwenkhebel vorstehen, dass es die Seitenwange oder die Stelleinheit kontaktiert, wobei der Stellhebel auf Abstand zur Seitenwange oder Stelleinheit gehalten wird. Dadurch wird sichergestellt, dass die seitliche Abstützung ausschließlich über das Abstützelement erfolgt, und keine zusätzliche Reibung zwischen Schwenkhebel und Seitenwange auftritt.

Der Gelenkbolzen kann an der Stelleinheit befestigt sein. Dabei dient der Gelenkbolzen als Lagerzapfen des Gelenks zwischen Stelleinheit und Stellhebel. Der Gelenkbolzen ist an der Stelleinheit fixiert und erstreckt sich seitlich, in Richtung der Schwenkachse durch die Gelenköffnung in dem Schwenkhebel. Auf der bezüglich der Stelleinheit außen liegenden Seite, die der Stelleinheit abgewandt und der Innenseite der Seitenwange zugewandt ist, kann erfindungsgemäß ein Abstützelement angeordnet sein. Mit seiner freien, von dem Schwenkhebel vorstehenden Stirnseite liegt das Abstützelement in Gleitkontakt an der Innenseite der Seitenwange an und bewirkt dadurch eine seitliche Abstützung der Stelleinheit gegen die Seitenwange.

Die Befestigung eines oder mehrerer Gelenkbolzen mit erfindungsgemäßem Abstützelement an der Stelleinheit ist für die Montage des Schwenkhebels und der Stelleinheit in der Trageinheit vorteilhaft.

Bevorzugt auf der axialen Stirnseite, mit der das Abstützelement an der Seitenwange gleitend anliegt, kann das Abstützelement eine Gleitfläche aufweisen. Die Gleitfläche kann reibungsmindernd ausgestaltet sein, beispielsweise indem sie ganz oder teilweise aus einem gut gleitfähigen Kunststoff ausgebildet ist, beispielsweise aus einem Kunststoff wie Polytetrafluorethylen (PTFE) besteht oder damit beschichtet ist, oder aus Buntmetall wie Messing, Bronze oder dergleichen. Dabei kann ein Teilbereich der Gleitfläche aus derartigen Material ausgestaltet sein, beispielsweise in Form einer Beschichtung oder eines Einsatzes, oder das Abstützelement kann als Ganzes aus einem solchen Material gefertigt sein. Zur Bildung eines Gleitlagers kann die Gegenfläche, auf der das Abstützelement mit seiner Gleitfläche an einer Seitenwange entlang gleiten kann, hinsichtlich der Gleitfähigkeit optimierten Materialpaarung ausgebildet sein, beispielsweise mit einer relativ zur Gleitfläche harten Oberfläche mit geringer Rauhigkeit, beispielsweise aus Stahl, Aluminium oder Metall-Druckguss.

Bevorzugt weist die Rauhigkeit der Gegenfläche der Seitenwange ein gemittelte Rautiefe Rz kleiner 4µm, besonders bevorzugt kleiner 2µm auf. Zusätzlich oder alternativ kann es vorgesehen sein, dass die Gegenfläche der Seitenwange zumindest teilweise reibungsmindernd beschichtet ist. Dadurch kann die zwischen dem Abstützelement und der Seitenwange wirkende Reibung reduziert werden.

Es kann vorgesehen sein, dass im Bereich einer Gleitfläche mindestens eine Schmiertasche ausgebildet ist. Eine Schmiertasche kann durch eine Einformung oder Vertiefung in der Gleitfläche gebildet werden, die mit Schmierfett oder einem geeigneten zähflüssigen oder festen Schmiermittel gefüllt wird. Aus dem derart realisierten Schmiermittelvorrat kann die Gleitfläche über die Betriebsdauer mit Schmierstoff versorgt werden, so dass ein optimiertes Gleitverhalten beim Verstellen der Lenksäule sichergestellt ist. Bevorzugt können eine oder mehrere Schmiertaschen vorgesehen sein.

Es ist möglich, dass alternativ oder zusätzlich der Gelenkbolzen an der Trageinheit befestigt ist, und sich als Lagerzapfen des Gelenks zwischen Trageinheit und Stellhebel seitlich, in Richtung der Schwenkachse durch die Gelenköffnung in dem Schwenkhebel erstreckt. In dieser Ausführung kann auf der innen liegenden Seite, die der Stelleinheit zugewandt ist, erfindungsgemäß ein Abstützelement angeordnet sein. Mit seiner freien, von dem Schwenkhebel vorstehenden Stirnseite kann das Abstützelement in Gleitkontakt an der Außenseite der Stelleinheit anliegen und dadurch eine seitliche Abstützung der Stelleinheit gegen die Seitenwange bewirken. Entsprechend kann dann auf der Stirnseite des Abstützelements, die gegen die Stelleinheit anliegt, eine Gleitfläche wie vorangehend beschrieben ausgebildet sein, und an der Stelleinheit eine Gegenfläche.

Bevorzugt sind zumindest zwei Abstützelemente paarweise auf gegenüberliegenden Seiten bezüglich der Längsachse angeordnet. Aufgrund ihrer Funktion, eine definierte Schwenkachse für den Schwenkhebel zur Verfügung zu stellen, werden Gelenkbolzen bevorzugt beiderseits der Längsachse angeordnet. Dadurch, dass an beiden Gelenkbolzen einer Schwenkachse jeweils ein erfindungsgemäßes Abstützelement angeordnet ist, welches sich jeweils zwischen Stelleinheit und Seitenwange abstützt, wird die Stelleinheit in dem Zwischenraum zwischen den gabelförmig angeordneten Seitenwangen seitlich eindeutig positioniert. Dabei können zwei Gelenkbolzen paarweise an der Stelleinheit fixiert sein, so dass sie mit ihren bezüglich der Stelleinheit außen liegenden Stirnseiten gleitend gegen die Innenseiten der Seitenwangen anliegen. Alternativ oder zusätzlich können zwei Gelenkbolzen an den Seitenwangen fixiert sein, und gleitend an der Stelleinheit anliegen.

Ein Gelenkbolzen kann vorzugsweise einen Befestigungsabschnitt und einen Lagerabschnitt aufweisen. Der Befestigungsabschnitt wird beispielsweise durch einen Gewindeabschnitt gebildet, mit dem ein Gelenkbolzen zur Fixierung in eine korrespondierende Gewindebohrung einschraubbar ist, beispielsweise in der Stelleinheit. An den Gewindeabschnitt kann sich ein Lagerabschnitt anschließen, der beispielsweise zylindrisch ausgebildet ist und in einer daran angepassten, zylindrischen Lagerbohrung in dem Schwenkhebel um die Bolzenachse schwenkbar aufnehmbar ist. Bevorzugt ist der Durchmesser des Lagerabschnitts größer als der Außendurchmesser des Gewindeabschnitts, so dass ein definierter Anschlag beim Einschrauben des Gewindeabschnitts gebildet wird.

Weiterhin ist es möglich, dass der Gelenkbolzen einen Kopf aufweist, an dem das Abstützelement angebracht ist. Der Kopf hat bei der Erfindung eine Doppelfunktion: Zum einen dient er zur Fixierung des Stellhebels in dem jeweiligen Gelenk, indem er im Anschluss an den Lagerabschnitt stirnseitig an dem Ende ausgebildet ist, welches dem als Befestigungsabschnitt dienenden Gewindeabschnitt abgewandt ist, und einen größeren Durchmesser hat als der Lagerabschnitt. Dadurch wird der Stellhebel auf dem Gelenkbolzen gehalten, wenn dieser beispielsweise mit dem Gewindeabschnitt in die Stelleinheit eingeschraubt ist. Zur Befestigung kann der Kopf ähnlich wie ein herkömmlicher Schraubenkopf einen Werkzeugansatz aufweisen, beispielsweise einen Innen- oder Außen-Mehrkant, welcher mittels eines passenden Werkzeugs das Einschrauben des Gewindeabschnitts ermöglicht.

Zum anderen kann der Kopf ausgestaltet sein zur Befestigung eines Abstützelements. Hierzu können der Kopf und das Abstützelement miteinander korrespondierende Befestigungselemente aufweisen, die beispielsweise durch Kraftschluss und/oder Formschluss wirksam sind. Dabei ist es vorteilhaft, das ein Befestigungselement hinsichtlich des Bauraums und der erforderlichen Haltewirkung mit geringem Aufwand an die jeweiligen Gegebenheiten angepasst werden kann. Beispielsweise kann der Kopf eine stirnseitige Aufnahmeöffnung haben, und das Abstützelement einen korrespondierenden Befestigungszapfen, der in besagte Aufnahmeöffnung formschlüssig und/oder kraftschlüssig einsetzbar ist.

Eine Ausführungsform der Erfindung sieht vor, dass das Abstützelement kappenförmig ausgebildet und auf den Gelenkbolzen aufgesteckt ist. Bevorzugt weist das kappenförmige Abstützelement eine axiale Aufnahmeöffnung auf, die bevorzugt den Kopf, der von dem Stellhebel vorsteht, aufnehmen kann. Dadurch bildet das Abstützelement eine auf den Kopf des Gelenkbolzens aufsteckbare Kappe, die mit geringem Fertigungsaufwand zur Verfügung gestellt und auf dem Gelenkbolzen montiert werden kann, beispielsweise als Kunststoffkappe aus einem Kunststoffmaterial mit guten Gleiteigenschaften.

Es ist vorteilhaft, dass zwischen dem Gelenkbolzen und dem Abstützelement ein Vorspannelement angeordnet ist. Durch das Vorspannelement wird eine Vorspannkraft auf das Abstützelement in axialer Richtung der durch den Gelenkbolzen definierten Schwenkachse ausgeübt. Das Abstützelement wird in Richtung der Vorspannkraft bewegbar an dem Gelenkbolzen gelagert. Durch die Vorspannkraft wird die Stelleinheit zwischen den Seitenwangen verspannt, und entsprechend wird der Gleitkontakt zwischen dem Abstützelement und der Gegenfläche, beispielsweise auf der Innenseite einer Seitenwange, durch die Vorspannkraft belastet. Bevorzugt kann das Vorspannelement als elastisches Element ausgebildet sein, beispielsweise als Federelement. Ein derartiges Federelement kann zwischen der Stirnseite des Kopfes eines Gelenkbolzens und eines darauf angeordneten Abstützelements angeordnet sein, so dass der Kopf als Widerlager für das Abstützelement dient, welches mit der als Vorspannkraft wirkenden Federkraft an die Gegenfläche an der Seitenwange oder der Stelleinheit angedrückt wird.

Bevorzugt ist das Abstützelement mit einem Halteelement verbunden, welches das Vorspannelement an dem Abstützelement sichert. Durch das Halteelement ist das Vorspannelement an dem Abstützelement fixiert, so dass das Abstützelement und das Vorspannelement sicher auf dem Gelenkbolzen montiert werden kann, ohne dass es zum Verlust des Vorspannelements während der Montage kommt.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Darstellung,
- Figur 2: die Lenksäule gemäß Figur 1 in einer auseinander gezogenen Darstellung,
- Figur 3: eine schematische Detailansicht der Lenksäule gemäß Figur 1 in einer auseinander gezogenen Darstellung,
- Figur 4: die Lenksäule gemäß Figur 1 in einer Seitenansicht (in Höhe der Schwenkachse),
- Figur 5: eine Querschnittsansicht der Lenksäule gemäß Figur 1,
- Figur 6: eine vergrößerte Detailansicht von Figur 5 durch einen Gelenkbolzen in einer ersten Ausführung,
- Figur 7: eine vergrößerte Detailansicht von Figur 5 durch einen Gelenkbolzen in einer zweiten Ausführung,
- Figur 8: eine vergrößerte Detailansicht von Figur 5 durch einen Gelenkbolzen in einer dritten Ausführung,
- Figur 9: eine vergrößerte Detailansicht von Figur 5 durch einen Gelenkbolzen in einer vierten Ausführung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

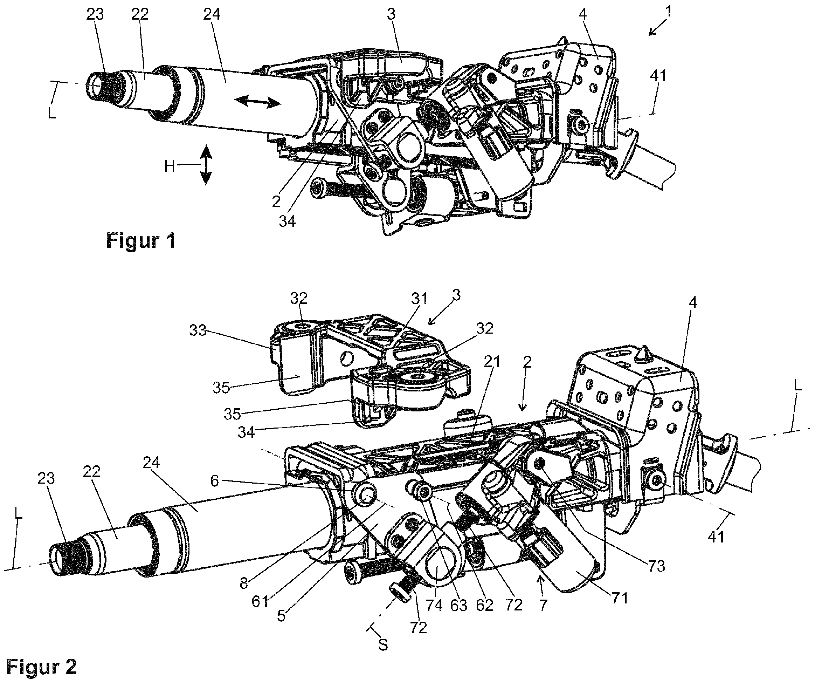

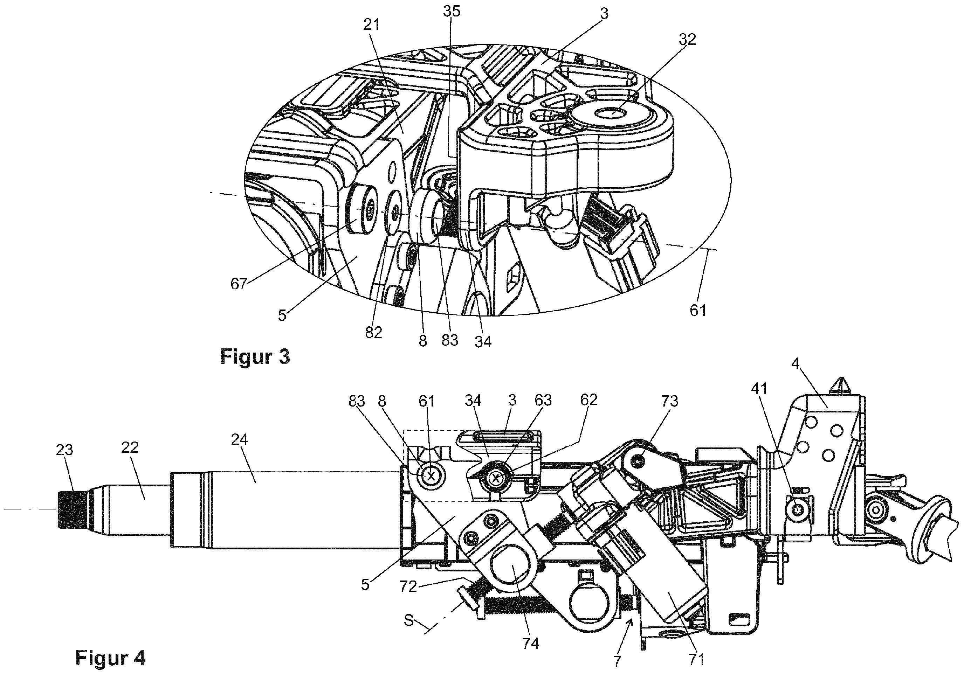

Figur 1 zeigt eine Lenksäule 1 in einer perspektivischen Gesamtansicht in zusammengebauten Zustand, die eine Stelleinheit 2 aufweist, die in einer Trageinheit 3 gehalten ist. In Figur 2 ist die Trageinheit 3 nach oben von der Stelleinheit 2 abgenommen dargestellt. Figur 4 zeigt eine Seitenansicht der Lenksäule 1, wobei Teilbereiche der Trageinheit 3 zur besseren Übersicht weggelassen sind.

Die Stelleinheit 2 weist eine Manteleinheit 21 auf, auch als Führungskasten bezeichnet, in der eine Lenkspindel 22 um die Längsachse L drehbar gelagert ist. Die Lenkspindel 22 weist an ihrem bezüglich der Fahrtrichtung eines Kraftfahrzeugs hinteren, dem Fahrer zugewandten Ende einen Befestigungsabschnitt 23 zur Anbringung eines an sich bekannten, hier nicht dargestellten Lenkrads auf. Zur Längsverstellung der Lenkspindel 22 ist ein Mantelrohr 24 in Richtung der Längsachse L teleskopartig verstellbar in der Manteleinheit 21 aufgenommen, wie dies mit den Doppelpfeilen parallel zur Längsachse L angedeutet ist.

In ihrem bezüglich der Fahrtrichtung vorderen Bereich ist die Manteleinheit 21 in einer an einer nicht dargestellten Fahrzeugkarosserie montierbaren Halteeinheit 4 um eine quer zur Längsachse L, im Fahrzeug horizontal liegenden Verstellachse 41 verschwenkbar gelagert, wodurch das lenkradseitige Ende der Manteleinheit 21 zur Höhenverstellung in Höhenrichtung H auf und ab verstellbar ist, wie mit dem Doppelpfeil angedeutet.

Die Trageinheit 3 weist einen Trägerkörper 31 mit Befestigungsmitteln 32 in Form von Befestigungsöffnungen auf, von dem sich zwei Seitenwangen 33 und 34 auf die sich in der dargestellten Einbaulage in Höhenrichtung H von nach unten erstrecken, wobei sich deren Innenflächen 35 quer zur Längsachse L einander gegenüberliegen, so dass eine nach unten offene gabelartige Anordnung gebildet wird.

Im Einbauzustand gemäß Figur 1 und Figur 4 ist die Stelleinheit 2 mit der Manteleinheit 21 zwischen den Seitenwangen 33, 34 angeordnet. Bei einer Höhenverstellung durch Verschwenken um die Verstellachse 41 bewegt sich die Stelleinheit 2 zwischen den Seitenwangen 33, 34 entsprechend in Höhenrichtung H nach oben oder unten.

Zwischen der Stelleinheit 2 und der Trageinheit 3 ist ein Schwenkhebel 5 angebracht, der an der Manteleinheit 21 in einem Gelenk 6 um eine Schwenkachse 61, auch als Gelenkachse 61 bezeichnet, die sich quer zur Längsachse L und zur Höhenrichtung H horizontal, d.h. in Seitenrichtung erstreckt. Um eine zweite Schwenkachse (Gelenkachse) 62, welche parallel mit Abstand in Richtung der Längsachse zur ersten Schwenkachse 61 angeordnet ist, ist der Schwenkhebel 5 um einen Gelenkzapfen 63 verschwenkbar in der Trageinheit 3 gelagert.

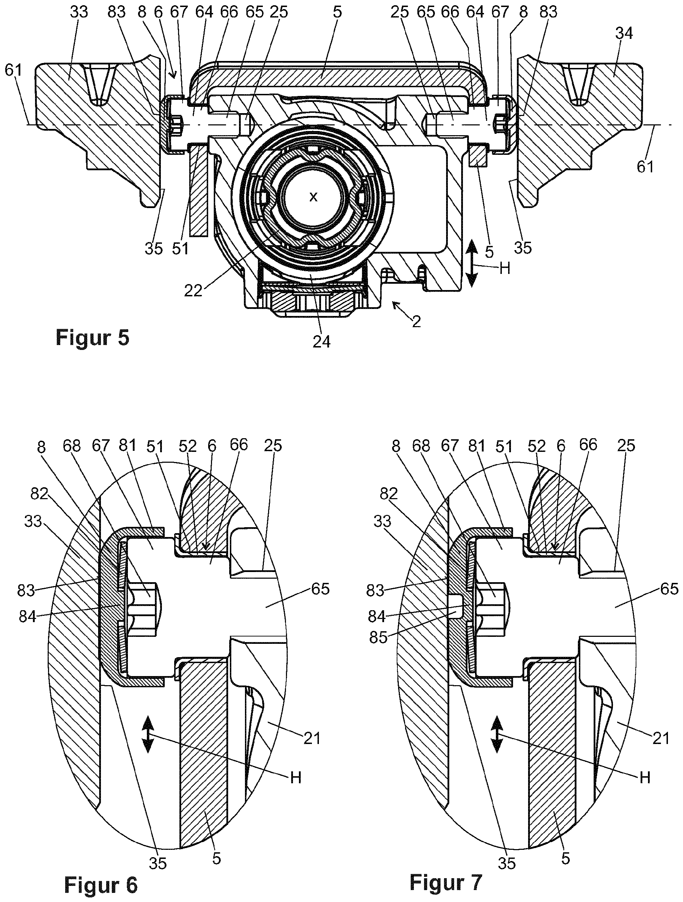

Der Schwenkhebel 5 ist seitlich zwischen der Manteleinheit 21 der Stelleinheit 2 und den Innenflächen 35 der Seitenwangen 33, 34 angeordnet, wie dies deutlich aus Figur 5 entnehmbar ist, welche einen Querschnitt durch die Lenksäule 1 das entlang der Schwenkachse 61zeigt. Daraus geht ebenfalls hervor, dass der Schwenkhebel 5 die Manteleinheit 21 derart von oben umgreift, dass er sich auf beiden Seiten zwischen Stelleinheit 2 und Seitenwangen 33, 34 erstreckt.

Ein als Spindeltrieb ausgebildeter Verstellantrieb 7 zur Höhenverstellung umfasst einen elektrischen Stellmotor 71, von dem eine Gewindespindel 72 um ihre Spindelachse S drehend antreibbar ist, wobei die Gewindespindel 72 in Richtung der Spindelachse S in einem Widerlager 73 an der Manteleinheit 21 verschwenkbar abgestützt ist. Die Gewindespindel 72 greift in eine Spindelmutter 74 ein, die bezüglich der Spindelachse S drehfest mit dem Schwenkhebel 5 verbunden ist. Die Gewindespindel 72 weist ein Außengewinde auf, wobei das Außengewinde in ein korrespondierendes Innengewinde der Spindelmutter 74 eingreift. Durch dieses Gewindegetriebe wird die rotatorische Bewegung der Gewindespindel 72 in eine translatorische Bewegung der Spindelmutter 74 umgewandelt.

Durch drehenden Antrieb der Gewindespindel 72 erfährt die Spindelmutter 74 eine lineare Bewegung in Richtung der Spindelachse S, welche in den Schwenkhebel 5 eingeleitet wird. Dadurch, dass die Spindelmutter 74 jeweils mit Abstand zu den Schwenkachsen 61 und 62 mit dem Schwenkhebel verbunden ist, wird diese lineare Bewegung in eine Schwenkbewegung des Schwenkhebels 5 um die Schwenkachse 61 umgesetzt. Dadurch wird - je nach Drehrichtung des Stellmotors 71 - der Stellhebel 5 in die eine oder andere Richtung verschwenkt, wodurch die Stelleinheit 2 relativ zur Trageinheit 3 zwischen den Seitenwangen 33, 34 in Höhenrichtung H nach oben oder unten verstellt wird.

Aus der Querschnittdarstellung in Figur 5 geht hervor, dass ein Gelenk 6 jeweils einen Gelenkbolzen 64 aufweist. Ein Gelenkbolzen 64 weist einen Gewindeabschnitt 65 auf, der in eine korrespondierende Gewindebohrung 25 in der Manteleinheit 21 eingeschraubt ist. Der Gewindeabschnitt 65 und die Gewindebohrung 25 weisen bevorzugt ein metrisches ISO-Gewinde auf. An den Gewindeabschnitt 65 schließt sich ein zylindrischer Lagerabschnitt 66 an, der in einer Lagerbohrung 51 des Schwenkhebels 5 um die Schwenkachse 61 drehbar gelagert ist. In die Lagerbohrung 51 ist eine Lagerbuchse 52 eingesetzt, beispielsweise aus Lagermetall, beispielsweise Messing, oder Kunststoff, um eine dauerhaft leichtgängige Verschwenkbarkeit sicherzustellen. An den Lagerabschnitt 66 schließt sich ein Kopf 67 an, der einen größeren Durchmesser hat als der Lagerabschnitt 66.

Im gezeigten Beispiel ist der Kopf 67 zylindrisch ausgebildet, wie in der schematisch auseinander gezogenen Darstellung von Figur 3 erkennbar ist. Er weist einen Werkzeugansatz 68 auf, beispielsweise einen Innenmehrkant - beispielsweise wie in dieser Ausführungsform dargestellt einen Innensechskant - in den ein passendes Werkzeug einsetzbar ist, um den Gewindeabschnitt 65 in die Gewindebohrung 25 in der Manteleinheit 21 fest einzuschrauben und dadurch den Gelenkbolzen 64 an der Stelleinheit 2 zu fixieren. Zur Sicherung des Gelenkbolzens 64 in der Gewindebohrung 25 kann eine Klebstoff-Mikroverkapselung zur Bereitstellung einer stoffschlüssigen Verbindung zwischen dem Gelenkbolzen 64 und der Gewindebohrung 25 vorgesehen sein. Die Mikrokapseln zerbrechen beim Verschrauben und geben den Klebstoff zur Verklebung der Gewindegänge ab.

Auf dem Kopf 67 des Gelenkbolzens 64 ist außen stirnseitig ein Abstützelement 8 angebracht. Das Abstützelement 8 ist im gezeigten Beispiel kappenförmig mit einem im Wesentlichen rohrförmigen Halteabschnitt 81 ausgebildet, mit dem es auf das freie Ende des Kopfes 67 aufgesteckt ist und diesen umfangsseitig umgreift. Auf seiner dem Kopf 67 abgewandten äußeren Stirnseite weist das Abstützelement 8 eine Gleitfläche 83 auf.

Zwischen dem Kopf 67 und dem Abstützelement 8 ist ein Federelement 82 angeordnet, welches als elastisches Vorspannelement fungiert. Das Federelement 82 kann bevorzugt wie in dem gezeigten Beispiel als kegelmantel-ringförmige Tellerfeder ausgebildet sein. Alternativ kann auch eine Wellfeder zum Einsatz kommen. Durch einen zentralen zapfenförmigen Absatz 84, der von dem Abstützelement 8 nach innen gegen den Kopf 67 vorsteht, der das ringförmige Federelement 82 durchgreift, kann dieses zentriert auf dem Kopf 67 gehalten werden. Diese Anordnung ist deutlich in den vergrößerten Darstellungen von Figur 6 bis 9 erkennbar.

Der Halteabschnitt 81 hält das Abstützelement 8 in Richtung der Schwenkachse 61 verschiebbar auf dem Kopf 67. Die Abmessungen der Manteleinheit 21 und der beiden Gelenkbolzen 64 sind so bemessen, dass in dem in Figur 5 gezeigten Montagezustand die Federelemente 82 in Richtung der Schwenkachse 61 elastisch zusammengepresst werden und die auf beiden Seiten auf den Köpfen 67 der Gelenkbolzen 64 angebrachten Abstützelemente 8 mit ihren Gleitflächen 83 mit der resultierenden Federkraft in Gleitkontakt gegen die als Gegenflächen ausgebildeten Innenflächen 35 der Seitenwangen 33, 34 belasten. Beim Verstellen der Lenksäule 1 in Höhenrichtung H gleiten die Abstützelemente 8 dadurch spielfrei auf den Innenflächen 35 der Seitenwangen 33, 34 entlang, so dass die Stelleinheit 2 in Höhenrichtung H an der Trageinheit 3 geführt wird.

Durch die Größe der Federkonstante der Federelemente 82 kann entsprechend die Federkraft vorgegeben werden, die angibt, wie fest die Stelleinheit 2 zwischen den Seitenwangen 33, 34 verspannt ist. Eine große Federkraft sorgt für eine hohe Eigenfrequenz, wobei die Federkraft unter Berücksichtigung der Materialpaarung der Abstützelemente 8 und der Innenflächen 35 der Seitenwangen 33, 34 angepasst werden kann, damit die beim Verstellen zu überwindende Reibungskraft beim Gleiten der Abstützelemente 8 innerhalb akzeptabler Grenzwerte bleibt.

Zur Verringerung der Gleitreibung können die Abstützelemente 8 zumindest im Bereich der Gleitfläche 83 reibungsmindernd ausgestaltet sein, beispielsweise durch Einsatz gut gleitfähiger Kunststoffe, die zumindest teilweise Polytetrafluorethylen oder dergleichen umfassen oder gänzlich daraus bestehen, oder für Lageranwendungen geeignete Buntmetalle. Die kappenförmigen Abstützelemente 8 können vorteilhaft auch als Ganzes aus derartigen Materialen gefertigt werden.

Zur weiteren Verringerung der Reibung kann wie in Figur 7 dargestellt, zumindest eine Schmiertasche 85 in Form einer Ausnehmung oder Vertiefung in die Gleitfläche 83 eingebracht sein, die vor der Montage mit Schmierfett oder dergleichen gefüllt wird und während der Betriebsdauer einen Schmierfilm zwischen dem Abstützelement 8 und der Innenfläche 35 der Seitenwangen 33, 34 erzeugt, welcher die Reibung verringert.

Aus Figur 3 ist entnehmbar, wie die Montage erfolgt: Der Gelenkbolzen 64 ist zur beschriebenen gelenkigen Lagerung des Schwenkhebels 5 in die Manteleinheit 21 fest eingeschraubt. Auf den seitlich von dem Schwenkhebel 5 vorstehenden Kopf 67 wird stirnseitig von außen zuerst das Federelement 82 und dann das Abstützelement 8 in Richtung der Schwenkachse 61 aufgesetzt. Anschließend wird die Stelleinheit 2 samt Schwenkhebel 5 zwischen die Seitenwangen 33, 34 eingefügt, so dass der Montagezustand wie in Figur 5 hergestellt wird. Die Anordnung des Gelenkbolzens 64 mit dem Abstützelement 8 ist in Figur 4 erkennbar, wobei zur besseren Übersicht die Seitenwange 34 teilweise weggelassen ist, wie gestrichelt eingezeichnet.

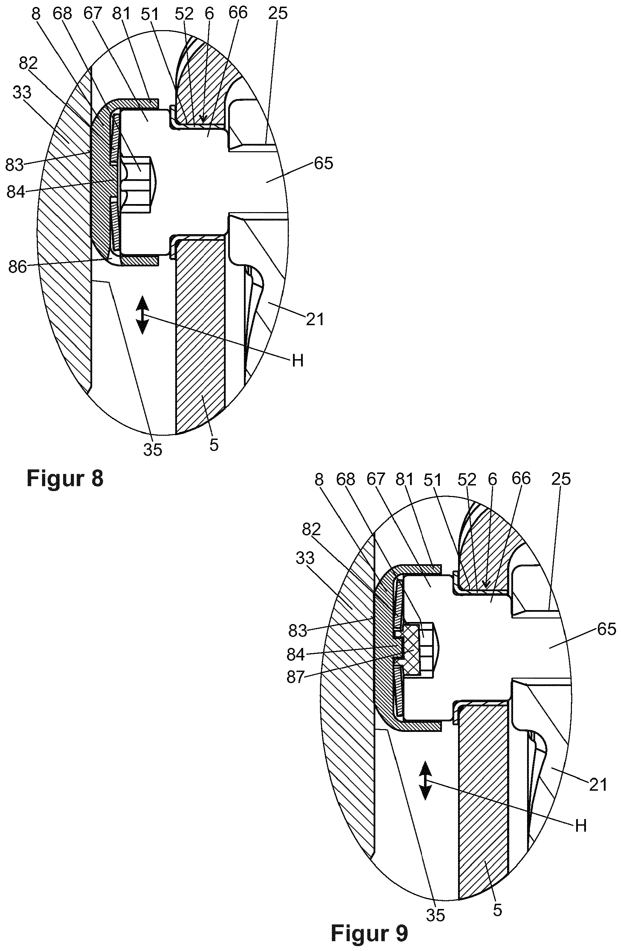

Figur 8 zeigt eine vergrößerte Detailansicht von Figur 5 durch einen Gelenkbolzen in einer dritten Ausführung. Das Abstützelement 8 weist eine durchgehende Öffnung 86 auf, so dass nach der Montage des Abstützelements 8 auf dem Gelenkbolzen 64 festgestellt werden kann, ob das Vorspannelement 82 verbaut worden ist. Die Detektion des Vorhandenseins des Vorspannelements 82 durch die Öffnung 86 kann mechanisch, beispielsweise mittels eines Stößels, optisch oder magnetisch festgestellt werden. Die dritte Ausführungsform der Figur 8 kann zusätzlich eine Schmiertasche umfassen, wie dies in der zweiten Ausführungsform der Figur 7 vorgesehen ist.

Figur 9 zeigt eine vergrößerte Detailansicht von Figur 5 durch einen Gelenkbolzen in einer vierten Ausführung. Das Abstützelement 8 weist einen Ansatz 84 auf, auf den ein Haltekörper 87 aufgesteckt bzw. aufgepresst ist. Zwischen dem Abstützelement 8 und dem Haltekörper 84 ist das Vorspannelement 82 angeordnet und gehalten. Das Halteelement 84 ermöglicht es, dass das Abstützelement 8 und das Vorspannelement 82 als Unterbaugruppe vormontierbar ist, so dass das Vorspannelement 82 bei der Montage des Abstützelements 8 auf dem Gelenkbolzen 64 nicht aus dem Abstützelement 8 heraus fällt. Somit ist eine sichere Montage des Abstützelements 8 zusammen mit dem Vorspannelement 82 möglich. Das Halteelement 87 ist bevorzugt aus Kunststoff gebildet. Das Halteelement 87 ragt in den Werkzeugansatz 68 des Gelenkbolzens 64 hinein.

## Patentansprüche

1. Verstellbare Lenksäule (1) für ein Kraftfahrzeug, umfassend eine Stelleinheit (2), in der eine Lenkspindel (22) um eine Längsachse (L) drehbar gelagert ist, und eine Trageinheit (3), welche zwei nach unten vorstehende, quer zur Längsachse (L) gegenüberliegende Seitenwangen (33, 34) aufweist, zwischen denen die Stelleinheit (2) in Höhenrichtung (H) verstellbar angeordnet ist, wobei ein motorischer Verstellantrieb (7) einen Stellhebel (5) aufweist, der an der Stelleinheit (2) und an der Trageinheit (3) jeweils um eine quer zur Längsachse (L) liegende Schwenkachse (61) in einem Gelenk (6) verschwenkbar gelagert ist, wobei zumindest das Gelenk (6) einen Gelenkbolzen (64) aufweist, der in einer Lagerbohrung (51) des Stellhebels (5) gelagert ist,
**dadurch gekennzeichnet,**
**dass** zumindest das Gelenkbolzen (64) ein Abstützelement (8) aufweist, welches sich gleitend zwischen und auf der Stelleinheit (2) und einer Seitenwange (33, 34) abstützt.

2. Lenksäule nach Anspruch 1, **dadurch gekennzeichnet, dass** das Abstützelement (8) an dem Gelenkbolzen (64) in Richtung der Schwenkachse (61) von dem Stellhebel (5) vorstehend angebracht ist.

3. Lenksäule nach einem der vorangehenden Ansprüche, **dadurch gekennzeichnet, dass** der Gelenkbolzen (64) an der Stelleinheit (2) befestigt ist.

4. Lenksäule nach einem der vorangehenden Ansprüche, **dadurch gekennzeichnet, dass** der Gelenkbolzen (64) einen Befestigungsabschnitt (65) und einen Lagerabschnitt (66) aufweist.

5. Lenksäule nach einem der vorangehenden Ansprüche, **dadurch gekennzeichnet, dass** der Gelenkbolzen (64) einen Kopf (67) aufweist, an dem das Abstützelement (8) angebracht ist.

6. Lenksäule nach Anspruch 5, **dadurch gekennzeichnet, dass** der Kopf (67) und das Abstützelement (8) miteinander korrespondierende Befestigungselemente (81) aufweisen.

7. Lenksäule nach einem der vorangehenden Ansprüche, **dadurch gekennzeichnet, dass** zwischen dem Gelenkbolzen (64) und dem Abstützelement (8) ein Vorspannelement (82) angeordnet ist.

8. Lenksäule nach einem der vorangehenden Ansprüche, **dadurch gekennzeichnet, dass** das Abstützelement (8) eine Gleitfläche (83) aufweist, die reibungsmindernd ausgebildet ist.

9. Lenksäule nach Anspruch 8, **dadurch gekennzeichnet, dass** im Bereich der Gleitfläche (83) eine Schmiertasche (85) ausgebildet ist.

10. Lenksäule nach einem der Ansprüche 7 bis 9 , **dadurch gekennzeichnet, dass** das Abstützelement (8) mit einem Halteelement (87) verbunden ist, welches das Vorspannelement (82) an dem Abstützelement (8) sichert.

## Claims

1. Adjustable steering column (1) for a motor vehicle, comprising a actuating unit (2) in which a steering spindle (22) is mounted so as to be rotatable about a longitudinal axis (L), and a support unit (3) which has two downwardly projecting lateral side plates (33, 34) that are transversely opposite to the longitudinal axis (L), between which the actuating unit (2) is disposed so as to be adjustable in the height direction (H), wherein a motorized adjustment drive (7) has an actuating lever (5) which, on the actuating unit (2) and on the support unit (3), is in each case mounted in a joint (6) so as to be pivotable about a pivot axis (61) that is transverse to the longitudinal axis (L), wherein at least the joint (6) has a joint pin (64) which is mounted in a bearing bore (51) of the actuating lever (5), **characterized in that** at least the joint pin (64) has a support element (8) which in a sliding manner is supported between and on the actuating unit (2) and a side plate (33, 34).

2. Steering column according to Claim 1, **characterized in that** the support element (8) is disposed on the joint pin (64) so as to project from the actuating lever (5) in the direction of the pivot axis (61).

3. Steering column according to one of the preceding claims, **characterized in that** the joint pin (64) is fastened to the actuating unit (2).

4. Steering column according to one of the preceding claims, **characterized in that** the joint pin (64) has a fastening portion (65) and a bearing portion (66) .

5. Steering column according to one of the preceding claims, **characterized in that** the joint pin (64) has a head (67) to which the support element (8) is attached.

6. Steering column according to Claim 5, **characterized in that** the head (67) and the support element (8) have mutually corresponding fastening elements (81) .

7. Steering column according to one of the preceding claims, **characterized in that** a preload element (82) is disposed between the joint pin (64) and the support element (8).

8. Steering column according to one of the preceding claims, **characterized in that** the support element (8) has a friction face (83) which is configured so as to reduce friction.

9. Steering column according to Claim 8, **characterized in that** a lubrication pocket (85) is configured in the region of the friction face (83).

10. Steering column according to one of Claims 7 to 9, **characterized in that** the support element (8) is connected to a holding element (87) which secures the preload element (82) on the support element (8).

## Revendications

1. Colonne de direction réglable (1) pour un véhicule automobile, comprenant une unité de réglage (2) dans laquelle un arbre de direction (22) est monté pivotant autour d'un axe longitudinal (L), et une unité de support (3) qui présente deux joues latérales (33, 34) opposées transversalement à l'axe longitudinal (L) et faisant saillie vers le bas, entre lesquelles l'unité de réglage (2) est disposée de manière réglable dans la direction de la hauteur (H), dans laquelle un entraînement de réglage motorisé (7) présente un levier de réglage (5) qui est monté sur l'unité de réglage (2) et sur l'unité de support (3) respectivement de manière à pouvoir pivoter autour d'un axe de pivotement (61) situé transversalement à l'axe longitudinal (L) dans une articulation (6), au moins l'articulation (6) présentant un axe d'articulation (64) qui est monté dans un alésage de palier (51) du levier de réglage (5),
**caractérisée en ce qu'**au moins l'axe d'articulation (64) présente un élément d'appui (8) qui prend appui glissant entre et sur l'unité de réglage (2) et une joue latérale (33, 34).

2. Colonne de direction selon la revendication 1, **caractérisée en ce que** l'élément d'appui (8) est installé sur l'axe d'articulation (64) en faisant saillie à partir du levier de réglage (5) en direction de l'axe de pivotement (61).

3. Colonne de direction selon l'une quelconque des revendications précédentes, **caractérisée en ce que** l'axe d'articulation (64) est fixé à l'unité de réglage (2) .

4. Colonne de direction selon l'une quelconque des revendications précédentes, **caractérisée en ce que** l'axe d'articulation (64) présente une partie de fixation (65) et une partie de palier (66).

5. Colonne de direction selon l'une quelconque des revendications précédentes, **caractérisée en ce que** l'axe d'articulation (64) présente une tête (67) sur laquelle est installé l'élément d'appui (8).

6. Colonne de direction selon la revendication 5, **caractérisée en ce que** la tête (67) et l'élément d'appui (8) présentent des éléments de fixation (81) qui se correspondent entre eux.

7. Colonne de direction selon l'une quelconque des revendications précédentes, **caractérisée en ce qu'**un élément de précontrainte (82) est disposé entre l'axe d'articulation (64) et l'élément d'appui (8).

8. Colonne de direction selon l'une quelconque des revendications précédentes, **caractérisée en ce que** l'élément d'appui (8) présente une surface de glissement (83) qui est réalisée pour réduire le frottement.

9. Colonne de direction selon la revendication 8, **caractérisée en ce qu'**une poche de lubrification (85) est réalisée dans la zone de la surface de glissement (83) .

10. Colonne de direction selon l'une quelconque des revendications 7 à 9, **caractérisée en ce que** l'élément d'appui (8) est relié à un élément de maintien (87) qui bloque l'élément de précontrainte (82) sur l'élément d'appui (8).
